# EUROPEAN PATENT APPLICATION

(11) **EP 0 913 619 A1**
(43) Date of publication of application: **06.05.1999**
(21) Application number: 98203488.6
(22) Date of filing: 16.10.1998
(51) Int. Cl.: F16L 41/14

(54) **Connecting structure between a profiled main pipe and a branch pipe**

(30) Priority: 21.10.1997 NL 1007329
(71) Applicant: POLVA PIPELIFE B.V., 1600 AJ Enkhuizen (NL)
(72) Inventor: Van Vulpen, Johanna Marjan, 1055 AB Amsterdam (NL); Guitoneau, Hans Edward, 1613 DH Grootenbroek (NL)
(74) Representative: de Bruijn, Leendert C.

(57) **Abstract**

A connecting structure between a pipe (1) which is profiled in the circumferential direction and a branch pipe contains a tubular coupling element (3), one end (6) of which is connected to the profiled pipe (1) via a hole (7) which is provided in the wall (9) thereof, and the other end (4) of which is connected to the branch pipe, a displaceable saddle (20,36) which is arranged around the coupling element (3) and is curved in a manner which corresponds to the profiled pipe (1), a stressing member (21,22), which interacts with the coupling element (3), for prestressing the saddle (20,36) on the profiled pipe (1), a retaining ring (10,35) which is situated around that end (6) of the coupling element (3) which has been pushed into the hole (7) and which, under the influence of the prestressing created by the stressing member (21,22), is kept pressed into and/or around the hole (7), as well as a support ring (42,45) which is accommodated between the saddle (20,36) and the outer wall of the profiled pipe (1), which support ring (42,45), on its side facing towards the said pipe (1), bears a mating profile (43) which accurately fits onto the profile of the profiled pipe (1), and which profile and mating profile are kept pressed together in a sealed manner under the influence of the prestressing.

## Description

The invention relates to the field of profiled pipes, in particular to the connecting structures for connecting branch pipes thereto. A profiled pipe with a profile which runs in the circumferential direction has the advantage that its resistance to deformation of its cross-section is relatively great at small wall thicknesses, and therefore when little material is used. Pipes of this kind have a smooth inner wall on which an external profile wall is arranged which, as seen in the longitudinal direction, has crests and troughs. The troughs are joined to the smooth wall, while open spaces are situated between the crests and the said wall. At the location of the crests, the profiled pipe has a high section modulus, resulting in the abovementioned high level of resistance to flattening of the pipe.

Owing to this external profile of the pipe, it is less easy to connect a branch pipe thereto. The coupling elements which are used for smooth pipes, such as those which are known from NL-A-8403899 or NL-A-8800527, cannot be employed directly for profiled pipes, since the troughs of the profile lead to sealing problems. Moreover, the hole which has to be provided in the profiled pipe entails considerable weakening, which makes connecting the known coupling elements even more difficult.

Therefore, the object of the invention is to provide a connecting structure which does not exhibit these drawbacks. This object is achieved by means of a connecting structure between a pipe which is profiled in the circumferential direction and a branch pipe, which structure contains a tubular coupling element, one end of which is connected to the profiled pipe via a hole which is provided in the wall thereof, and the other end of which is connected to the branch pipe, a displaceable saddle which is arranged around the coupling element and is curved in a manner which corresponds to the profiled pipe, a stressing member, which interacts with the coupling element, for prestressing the saddle on the profiled pipe, a retaining ring which is situated around that end of the coupling element which has been pushed into the hole and which, under the influence of the prestressing created by the stressing member, is kept pressed into and/or around the hole, as well as a support ring which is accommodated between the saddle and the outer wall of the profiled pipe, which support ring, on its side facing towards the said pipe, bears a mating profile which accurately fits onto the profile of the profiled pipe, and which profile and mating profile are kept pressed together in a sealed manner under the influence of the prestressing.

The mating profile of the support ring, which is pressed onto the profile of the profiled pipe under the influence of the prestressing, provides a reliable seal. The advantage is that even relatively high loads on the branch pipe which may emanate, for example, from wheel loads exerted on a road drain which is connected to the branch pipe, do not have an adverse effect on the seal. All that happens is that the support ring is compressed to a greater extent, which effect in fact improves the seal.

According to a first variant, the retaining ring and the support ring may be separate, and the internal dimensions of the hole in the support ring may be greater than or equal to the external dimensions of that end of the retaining ring which faces towards the saddle.

According to a second variant, the retaining ring and the support ring may be designed as a single unit.

Preferably, the mating profile of the support ring is slightly oversized by comparison with the profile of the profiled pipe.

According to a further possibility, a support bush is arranged in the hole in the profiled pipe, and the height of the circumferential wall of which support bush is at least equal to the height of the profiling, which support bush is connected to those parts of the profiled pipe which delimit the hole, the sealing ring being situated between the support bush and the coupling element.

The bush in the connecting structure according to the invention has a dual role. Firstly, it provides reinforcement for the pipe wall, compensating for the weakening caused by the hole made therein. Secondly, it provides the possibility of improving the seal between the coupling element and pipe wall still further, as will be explained below.

In order to ensure cohesion between the bush and pipe wall, it may be necessary to provide the support bush with an external flange which is supported on the profiled pipe. Preferably, the support bush has two external flanges, of which one bears against the inner circumference and the other against the outer circumference of the profiled pipe. In a design of this nature, the profiled wall of the pipe is successfully enclosed between the two flanges, which has a beneficial effect on the mechanical properties of the connecting structure.

Also the support bush may have external projections which are accommodated between the profiling of the profiled pipe.

As has been mentioned, the support bush according to the invention also contributes to improving the seal between the profiled pipe and the branch pipe. For this purpose, the support bush has an external flange at its inner end which is situated in the profiled pipe, between which flange and the opposite wall of the profiled pipe there is a gasket ring. When the connecting structure is prestressed by tightening the prestressing member which, for example by means of a screw thread, interacts with the coupling element, the gasket ring is pressed firmly between the internal wall of the profiled pipe and the flange, resulting in a leak-free connection.

This connection can be improved still further if the bush, on its wall which faces towards the edge of the hole in the profiled pipe, tapers conically outwards, in such a manner that, under the influence of the prestressing, the sealing ring which is situated between the bush and the coupling element is pressed in the radial direction.

In that case, the support bush provides a reliable seal not only with respect to the internal wall of the profiled pipe but also with respect to the coupling element.

Furthermore, the retaining ring may have, at its end which is remote from the interior of the profiled pipe, an external flange which extends over the bush. In this case, the saddle may have a recess in which the external flange of the sealing ring is accommodated in a close-fitting manner. In that case, the external flange of the sealing ring may be strongly prestressed in the recess.

In a known way (cf. NL-A-8403899), the coupling element, at its end which has been pushed into the hole, may be widened, in such a manner that the retaining ring is clamped in between the said widened end and the bush.

The invention will be explained in more detail below with reference to a number of exemplary embodiments which are illustrated in the figures, in which:
- Figure 1: shows a partial cross-section through a first design of the connecting structure.
- Figures 2a-2e: show variants of a support bush.
- Figures 3 and 3a: show a second design of the connecting structure.
- Figure 4: shows a support ring for use in the design in accordance with Figure 1.
- Figure 5: shows the support ring in accordance with Figure 4, arranged on a profiled pipe.
- Figure 6: shows a third design of the connecting structure.
- Figure 7: shows a longitudinal section showing the profile of a profiled pipe for the connecting structure.

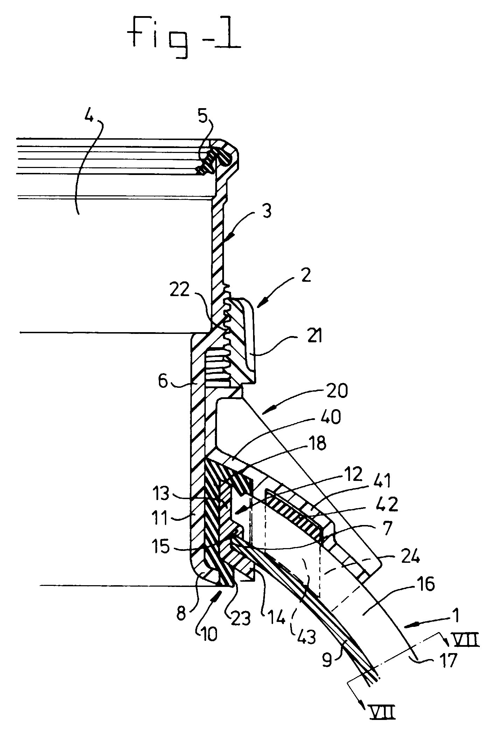

The connecting structure according to the invention which is illustrated in Figure 1 comprises a profiled main pipe 1, as well as a connection, which is denoted overall by 2. This connection comprises a coupling element 3 provided with a socket 4 with a known sealing element 5, into which the branch pipe (not shown) can be pushed.

In addition to the socket 4, which has a comparatively large internal diameter, the tubular coupling element 3 comprises a connecting section 6 with a smaller internal diameter. Since the internal diameter of the branch pipe is approximately the same size as the internal diameter of this connecting section 6, uniform, undisturbed flow without constrictions is ensured.

The connecting section 6 opens out into a hole which is provided in the profiled main pipe 1, the internal edge of which hole is denoted by 7. At the bottom end, the connecting section 6 has a part 8 which widens outwards, the retaining ring 10 being clamped between this widened part 8 and the internal, smooth wall 9 of the profiled pipe 1. In particular, the retaining ring 10 is clamped between the lower cylindrical part 11 of the connecting section 6, the widened part 8 and the support bush, which is denoted overall by 12.

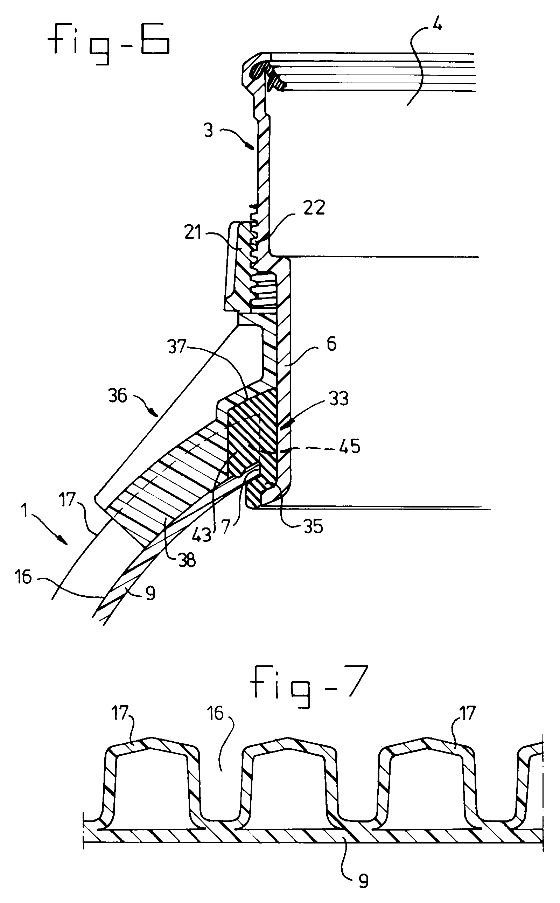

This support bush has a bush section 13, as well as a bottom, external flange 14 and radial projections 15. The external flange 14 is formed in a manner which corresponds to the internal wall 9 around the hole 7, while the projections 15 project into the troughs 16 between the crests 17 of the profiling: cf. also Figure 7.

The retaining ring 10 furthermore has an external flange 18 which, above the support bush 12, points outwards and lies on the crests 17 of the profiled pipe 1. The external flange 18 is accommodated in a chamber 40 of the saddle 20.

The connecting structure furthermore comprises a saddle 20, as well as a tightening nut 21 which, by means of screw thread 22, interacts with the socket 4 of the coupling element 3. By tightening the tightening nut 21 onto the saddle 20, saddle 20 is pressed firmly onto the outer limits of the profiled pipe 1. In the process, the connecting section 6 of the coupling element is pulled upwards with respect to the retaining ring 10, the external flange 18 of which is supported in the recess 22 in the saddle 20.

The lower section 23 of the retaining ring 10 is forced outwards by the widened part 8, in such a manner that it comes to bear against the external flange 14 of the support bush 15. Thus, when the tightening nut 21 is tightened further, a firm connection is obtained between the coupling element 3 and the profiled pipe 1.

On its surface which is directed towards the profiled pipe 1, the saddle may have ridges 24 which project into the troughs 16 of the profiling.

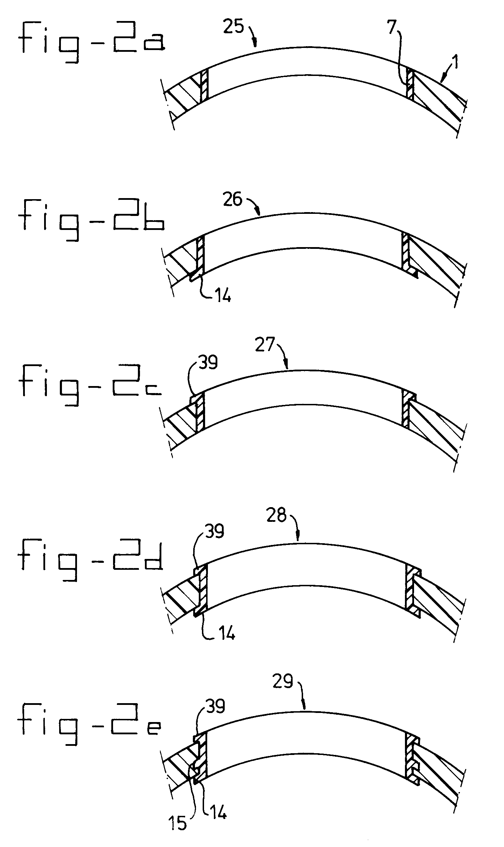

The support bush 12 according to the invention may be designed in various ways. As illustrated in Figure 2a, this support bush may also be designed without flanges. In that case, it still continues to reinforce the edge of the hole 7. However, in this case the retaining ring 10, and in particular the part 23 thereof, bears directly against the internal wall of the profiled pipe 1.

In the variant shown in Figure 2b, the support bush 26 has only a flange 14, while in the variant shown in Figure 2c the support ring 26 has a top flange 28.

A support bush 26 with both a bottom flange 14 and a top flange 28 is also possible, optionally in combination with the projection 15 (cf. Figure 2e).

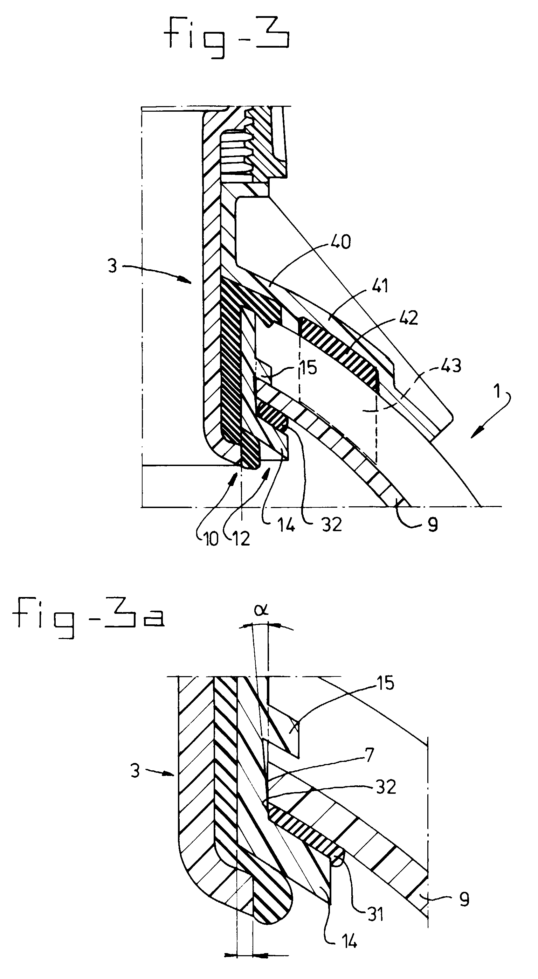

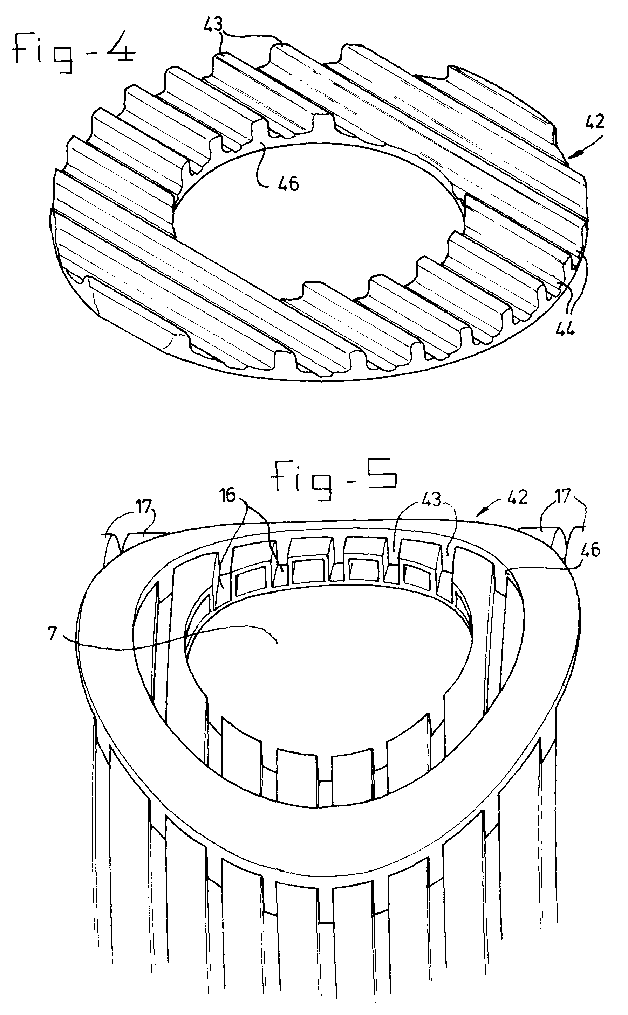

In order to ensure a reliable seal between the profiled pipe 1 and the branch pipe 2, a support ring 42 is clamped between the saddle 20 and the external surface of the pipe 1. This support ring 42 is accommodated in a second chamber 41 of the saddle 20. As illustrated in Figure 4, on one of its sides the support ring 42 has a profiling with ribs 43 and troughs 44 which fit accurately onto the troughs 16 and ribs 17 of the profiling of the ribbed main pipe 1. Figure 5 shows that the support ring 42 can fit onto the curved shape of the main pipe 1, around the hole 7. The diameter of the hole 46 in the support ring 42 is greater than that of the hole 7.

As a result of this larger diameter of the hole 46, the support ring fits around the flange 18 of the retaining ring 10. The ribs 43 of the support ring 42 may be slightly oversized by comparison with the dimensions of the troughs 16 of the main pipe 1, resulting in a reliable seal.

In the variant illustrated in Figure 3, a support bush 30 is used in which the distance between projections 15 and the bottom external flange 14 is of such a size that a gasket 31 fits between the said external flange 14 and the internal wall 9 of the profiled pipe 1. As can be seen in Figure 3, the support bush 30 has a conical external wall section 32. Owing to this shape, the support bush 30 will move inwards with respect to the edge of the hole 7 when the tightening nut 21 is tightened and as soon as it is pulled outwards under the influence thereof. As a result, the sealing ring 10 will be compressed firmly over a large section of its height. The gasket 31 is also compressed in the process, in such a manner that an excellent seal is obtained between the coupling element 3 and the profiled pipe 1.

In addition, a support ring 42 is provided for further sealing, in a similar manner to the embodiment shown in Figure 1.

The variant illustrated in Figure 6 has an annular body 33, comprising an integrated support ring 45 and a retaining ring 35. The support ring 45 has a larger radial dimension than the retaining ring 35, which just fits between the edge 7 of the hole in the profiled pipe 1 and the connecting section 6 of the coupling element 3.

The collar 36 has a recess 37 in which the support ring 45 fits in a close-fitting manner. Moreover, the collar 38 has ridges (one of which is shown in cross-section in Figure 6) which fit into the troughs 16. Those parts of the collar 36 which are situated between the ribs 38 rest on the crests 17.

## Claims

1. Connecting structure between a pipe (1) which is profiled in the circumferential direction and a branch pipe, which structure contains a tubular coupling element (3), one end (6) of which is connected to the profiled pipe (1) via a hole (7) which is provided in the wall (9) thereof, and the other end (4) of which is connected to the branch pipe, a displaceable saddle (20, 36) which is arranged around the coupling element (3) and is curved in a manner which corresponds to the profiled pipe (1), a stressing member (21, 22), which interacts with the coupling element (3), for prestressing the saddle (20, 36) on the profiled pipe (1), a retaining ring (10, 35) which is situated around that end (6) of the coupling element (3) which has been pushed into the hole (7) and which, under the influence of the prestressing created by the stressing member (21, 22), is kept pressed into and/or around the hole (7), as well as a support ring (42, 45) which is accommodated between the saddle (20, 36) and the outer wall of the profiled pipe (1), which support ring (42, 45), on its side facing towards the said pipe (1), bears a mating profile (43) which accurately fits onto the profile of the profiled pipe (1), and which profile and mating profile are kept pressed together in a sealed manner under the influence of the prestressing.

2. Connecting structure according to Claim 1, in which the retaining ring (10) and the support ring (42) are separate, and the internal dimensions of the hole (46) in the support ring (42) are greater than or equal to the external dimensions of that end (18) of the retaining ring (10) which faces towards the saddle (20).

3. Connecting structure according to Claim 1, in which the retaining ring (35) and the support ring (45) are designed as a single unit (33).

4. Connecting structure according to one of the preceding claims, in which the mating profile (43) of the support ring (42, 45) is slightly oversized by comparison with the profile of the profiled pipe (1).

5. Connecting structure according to one of the preceding claims, in which a support bush (12, 25-30) is arranged in the hole (7) in the profiled pipe (1), and the height of the circumferential wall of which bush is at least equal to the height of the profiling (16, 17), which support bush (12, 25-30) is connected to those parts of the profiled pipe (1) which delimit the hole (7), the sealing ring (10) being situated between the support bush (12, 25-30) and the coupling element (3).

6. Connecting structure according to Claim 5, in which the support bush (12, 25-30) has an external flange (14, 39) which is supported on the profiled pipe (1).

7. Connecting structure according to Claim 6, in which the support bush (28, 29) has two external flanges (14, 39), of which one bears against the inner circumference and the other against the outer circumference of the profiled pipe (1).

8. Connecting structure according to one of Claims 5-7, in which the support bush (12, 29) has external projections (15) which are accommodated between the profiling (16, 17) of the profiled pipe (1).

9. Connecting structure according to one of Claims 5-8, in which the support bush (12) has an external flange (14) at its inner end (6) which is situated in the profiled pipe (1), between which flange (14) and the opposite wall (9) of the profiled pipe (1) there is a gasket ring (31).

10. Connecting structure according to one of the preceding Claims 5-9, in which the support bush (30), on its wall (32) which faces towards the edge of the hole (7) in the profiled pipe (1), tapers conically outwards, in such a manner that, under the influence of the prestressing, the sealing ring (10) which is situated between the bush (30) and the coupling element (3) is pressed in the radial direction.

11. Connecting structure according to one of the preceding claims, in which the retaining ring (10) has, at its end which is remote from the interior of the profiled pipe (1), an external flange (18) which extends over the support bush (12, 30).

12. Connecting structure according to Claim 11, in which the saddle (20) has a recess (22) in which the external flange (18) of the sealing ring (10) is accommodated in a close-fitting manner.

13. Connecting structure according to one of the preceding claims, in which the saddle (20) has a recess (41) in which the support ring (42) is accommodated.

14. Connecting structure according to one of the preceding claims, in which the coupling element (3), at its end (6) which has been pushed into the hole (7), is widened by flaring, in such a manner that the retaining ring (10) is clamped in between the said widened end (8) and the support bush (12, 25-30).

15. Connecting structure according to one of the preceding claims, in which the saddle (20), on its face which is directed towards the profiled pipe (1), bears a profile with ridges (24, 135) which project into the troughs (16) of the profile.
